Europäisches Patentamt

European Patent Office

Office européen des brevets

(19)

(11) **EP 1 441 019 A1**

(12) **EUROPEAN PATENT APPLICATION**

(43) Date of publication:
28.07.2004 Bulletin 2004/31

(51) Int Cl.⁷: **C09K 11/08**, G21K 4/00

(21) Application number: 03028917.7

(22) Date of filing: 17.12.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 25.12.2002 JP 2002375035
05.02.2003 JP 2003028048

(71) Applicant: **KONICA MINOLTA HOLDINGS, INC.**
**Tokyo 100-0005 (JP)**

(72) Inventors:
• **Morikawa, Osamu**
**Tokyo 191-8511 (JP)**
• **Honda, Satoshi**
**Tokyo 191-8511 (JP)**
• **Shoji, Takehiko**
**Tokyo 191-8511 (JP)**
• **Nozaki, Atsuo**
**Tokyo 191-8511 (JP)**
• **Otani, Hiroshi**
**Tokyo 191-8511 (JP)**
• **Nakano, Yasushi**
**Tokyo 191-8511 (JP)**

(74) Representative:
**Gille Hrabal Struck Neidlein Prop Roos**
**Patentanwälte**
**Brucknerstrasse 20**
**40593 Düsseldorf (DE)**

(54) **Radiographic image conversion panel**

(57)     A radiographic image conversion panel includes a support; and a photostimulable phosphor layer provided on the support. A photostimulable phosphor is formed on the support by a vapor phase deposition method and then, heat treatment is performed at a temperature of from 80°C to 300 °C.

**Description**

BACKGROUND OF THE INVENTION

Technical Field

The present invention relates to a radiographic image conversion panel.

Description of Related Art

In earlier technology, a radiographic image conversion panel provided with a photostimulable phosphor layer on a support has been developed for a method for imaging a radiological image without using a silver salt in order to obtain a radiographic image.

In the radiographic image conversion panel, a radiation ray transmitted through a subject is applied to a photostimulable phosphor layer, the radiographic energy corresponding to the radiation transmittance in each part of the subject is accumulated in a photostimulable phosphor, thereafter, the photostimulable phosphor is time-serially excited with an electromagnetic wave (an excitation light) such as a visible ray or an infrared ray to thereby discharge the radiographic energy accumulated in the photostimulable phosphor as photostimulated luminescence and then, a signal due to the strength and weakness of this light is, for example, photoelectrically transferred to obtain an electric signal and the signal is reproduced on recording materials such as a silver halide photographic sensitive material or a display apparatus such as a CRT as a visible image.

These radiographic image conversion panels using the photostimulable phosphor can be repeatedly used because after accumulating radiographic image information, the accumulated energy is discharged by scanning of excitation light, so that a radiographic image can be again accumulated after the scanning. In other words, in conventional radiography, a radiographic film is spent for each shooting, on the other hand, in this radiographic image conversion method, the radiographic image conversion panel is repeatedly used and therefore, this method is advantageous in terms of resource conservation or economic efficiency.

It is known that relative merits of a radiographic image conversion method using a radiographic image conversion panel are greatly controlled by the photostimulated luminescence luminance and luminescence evenness of the panel, in particular, these characteristics are greatly controlled by those of the photostimulable phosphor to be used.

Recently, a radiographic image conversion panel using a photostimulable phosphor in which Eu is activated to a ground material of alkali halide such as CsBr or the like is suggested. Particularly, it is expected that it becomes possible to improve an X-ray conversion efficiency, which was unable to be obtained, by using Eu as an activator.

Such a radiographic image conversion panel is also used in an X ray image diagnostic apparatus or the like for medical use in many cases. In the image diagnostic apparatus for medical use, a radiographic image conversion panel having higher sensitivity and sharpness is demanded, particularly, in order to reduce the exposed dose of radiation rays irradiated to a patient.

In order to improve the sensitivity and sharpness of a radiographic image conversion panel, for example, the thickness of a phosphor layer is made to be in a range of from 300 to 700 μm and the relative density thereof is made to be in a range of from 85 to 97% in the patent document 1 (Japanese Patent Laid-Open Publication No.2002-214397 (page 2)).

However, in order to obtain a radiographic image conversion panel which is more improved in sharpness, it is absolutely necessary to obtain a photostimulable phosphor layer having higher luminance.

In addition, recently, a method for imaging a radiological image by a radiographic image conversion panel using a photostimulable phosphor is used.

This is, for example, a method of using a radiographic image conversion panel comprising a support having formed thereon a photostimulable phosphor layer as disclosed in U. S. Patent 3,859,527 and Japanese Patent Laid-Open Publication No. Sho 55-12144. In this radiographic image conversion panel, a radiation ray transmitted through a subject is applied to a photostimulable phosphor layer, the radiographic energy corresponding to the radiation transmittance in each part of the subject is accumulated in the photostimulable phosphor layer to form a latent image (an accumulated image), thereafter, the photostimulable phosphor layer is scanned with a photostimulated excitation light (a laser beam is used), thereby, the radiographic energy accumulated in each part is emitted and converted into a light, and the strength and weakness of this light is read out to obtain an image. This image may be reproduced on various displays such as a CRT or the like, or may be reproduced as a hardcopy.

As the photostimulable phosphor layer of the radiographic image conversion panel used for this radiographic image conversion method, for example, there is a method for using a photostimulable phosphor layer having a fine quasi-columnar block formed by depositing a photostimulable phosphor on a support having a fine concavoconvex pattern, as performed in Japanese Patent Laid-Open Publication No. Sho 61-142497, etc.

Further, a method for using a radiographic image conversion panel having a photostimulable phosphor layer in which cracks between columnar blocks obtained by depositing a photostimulable phosphor on a support having a fine pattern are shock-treated to be further developed as described in Japanese Patent Laid-Open Publication No. Sho 61-142500, further, a method for using a quasi-columnar radiographic image conversion panel in which cracks are caused from the surface side of a photostimulable phosphor layer formed on a face of a support as described in Japanese Patent Laid-Open Publication No. Sho 62-39737, furthermore, a method for providing cracks by forming a photostimulable phosphor layer having a void on an upper face of a support according to deposition, and thereafter, by growing the void according to heat treatment as described in Japanese Patent Laid-Open Publication No. Sho 62-110200, and the like are suggested.

Further, Japanese Patent Laid-Open Publication No. Hei 2-58000 proposes a radiographic image conversion panel having a photostimulable phosphor layer in which an elongated columnar crystal having a constant slope to a normal line direction of a support is formed on the support according to a vapor phase deposition method.

Any of these attempts of controlling a shape of the photostimulable phosphor layer is characterized in that since the transversal diffusion of photostimulated excitation light (or photostimulated luminescence) can be suppressed by rendering the photostimulable phosphor layer columnar (the light reaches the support face while repeating reflection in a crack (a columnar crystal) interface), the sharpness of an image formed by the photostimulated luminescence can be noticeably increased.

However, it is known that in these radiographic image conversion panels having a photostimulable phosphor layer formed by a vapor phase growth (deposition) method, most of photostimulable phosphors generally have high hygroscopicity, therefore, when leaving them under a general environmental condition, they gradually absorb moisture in air to cause noticeable deterioration in performance as time go on.

Conventionally, for example, as described in the patent document 1 (Japanese Patent Laid-Open Publication No. Hei 11-344598), there is known a method for preventing moisture absorption of a photostimulable phosphor layer by that the photostimulable phosphor layer formed by dispersing europium activated alkali earth metal fluorohalide phosphor particles in a binder is barriered and sealed using a moisture-proof protective film where a thin film of metal oxide, silicon nitride or the like is deposited.

However, a photostimulable phosphor crystal formed by the above-described vapor phase deposition method particularly has high hygroscopicity in materials or is not protected by a binder and therefore, when it is used, an improvement effect is confirmed but is insufficient with a sealing method using a moisture-proof protective film where a thin film of metal oxide or the like is deposited as described above. Accordingly, a method for more completely preventing moisture absorption is demanded.

As for the protection of a hygroscopic phosphor against vapor, for example, the patent document 2 (Japanese Patent Laid-Open Publication No. 2001-235548) describes an example of using a laminated film where a polyparaxylylene film and a moisture-proof film of silica or the like are sequentially formed by a CVD method in order to protect a phosphor such as CsI which is a scintillator material, against vapor. However, since characteristics deterioration due to moisture absorption in the photostimulable phosphor crystal is greatly large as compared with that in phosphor crystal materials for the scintillator, sufficient moisture-proof property to the photostimulable phosphor crystal can not be obtained even by such a construction.

## SUMMARY OF THE INVENTION

The present invention has been made under these circumstances and a first object of the present invention is to provide a radiographic image conversion panel having more excellent luminescence luminance.

Further, a second object of the present invention is to provide a radiographic image conversion panel capable of being used in a preferable state for a long period of time by reducing moisture permeability to a photostimulable phosphor layer formed by a vapor phase growth method and completely sealing the radiographic image conversion panel.

In order to solve the above-described problems, a first aspect of the present invention is a radiographic image conversion panel having a photostimulable phosphor layer on a support, wherein a photostimulable phosphor is formed on the support by a vapor phase deposition method and then, heat treatment is performed at a temperature of from 80°C to 300°C.

The above-described heat treatment is preferably performed at a temperature of from 100 °C to 200 °C.

The above-described photostimulable phosphor layer preferably comprises a photostimulable phosphor represented by a following Formula (1):

Formula (1)

$$M^1X \cdot aM^2X'_2 \cdot bM^3X''_3 : eA \qquad (1)$$

wherein the $M^1$ is at least one kind of alkali metal selected from a group consisting of Li, Na, K, Rb and Cs, the $M^2$ is at least one kind of bivalent metal selected from a group consisting of Be, Mg, Ca, Sr, Ba, Zn, Cd, Cu and Ni, the $M^3$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, each of the X, the X' and the X" is at least one kind of halogen selected from a group consisting of F, Cl, Br and I, the A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, and each of the a, the b and the e represents a numeric value in a range of $0 \leqq a < 0.5$, $0 \leqq b < 0.5$ and $0 < e \leqq 0.2$.

Further, the $M^1$ in Formula (1) is preferably at least one kind of alkali metal selected from a group consisting of K, Rb and Cs.

Further, the X in Formula (1) is preferably at least one kind of halogen selected from a group consisting of Br and I.

Further, the $M^2$ in Formula (1) is preferably at least one kind of bivalent metal selected from a group consisting of Be, Mg, Ca, Sr and Ba.

Further, the $M^3$ in Formula (1) is preferably at least one kind of trivalent metal selected from a group consisting of Y, La, Ce, Sm, Eu, Gd, Lu, Al, Ga and In.

Further, the b in Formula (1) preferably represents a numeric value in a range of $0 \leqq b \leqq 10^{-2}$.

Further, the A in Formula (1) is preferably at least one kind of metal selected from a group consisting of Eu, Cs, Sm, Tl and Na.

The above-described photostimulable phosphor layer preferably comprises a columnar crystal of the above-described photostimulable phosphor.

The above-described columnar crystal preferably comprises a photostimulable phosphor represented by the following Formula (2):

Formula (2)

CsX: A

wherein the X represents Br or I, and the A represents Eu, In, Ga or Ce.

According to the first aspect of the present invention, by forming a photostimulable phosphor on a support of a radiographic image conversion panel by a vapor phase deposition method and then, by performing heat treatment at a temperature of from 80°C to 300°C, the radiographic image conversion panel having more excellent luminescence luminance can be obtained.

According to a second aspect of the present invention, a radiographic image conversion panel comprises: a support; a photostimulable phosphor layer formed on the support by vapor phase deposition to a film thickness of 50 μm or more; an organic film integrally deposited and formed to cover a surface of a photostimulable phosphor of the photostimulable phosphor layer; and a metal oxide-deposited film covering at least a side of the photostimulable phosphor layer.

The organic film is preferably a polyparaxylylene film.

The photostimulable phosphor is preferably represented by the following Formula (1):

Formula (1)

$$M^1X \cdot aM^2X_2' \cdot bM^3X_3'' : eA$$

wherein the $M^1$ is at least one kind of alkali metal selected from a group consisting of Li, Na, K, Rb and Cs, the $M^2$ is at least one kind of divalent metal selected from a group consisting of Be, Mg, Ca, Sr, Ba, Zn, Cd, Cu and Ni, the $M^3$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, each of the X, the X' and the X" is at least one kind of halogen atom selected from a group consisting of F, Cl, Br and I, the A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, and each of the a, the b and the e represents a numeric value in a range of $0 \leqq a < 0.5$, $0 \leqq b < 0.5$ and $0 < e \leqq 0.2$.

Further, the $M^1$ in Formula (1) is preferably at least one kind of alkali metal selected from a group consisting of K, Rb and Cs.

Further, the X in Formula (1) is preferably at least one kind of halogen atom selected from a group consisting of Br and I.

Further, the $M^2$ in Formula (1) is preferably at least one kind of bivalent metal selected from a group consisting of Be, Mg, Ca, Sr and Ba.

Further, the $M^3$ in Formula (1) is preferably at least one kind of trivalent metal selected from a group consisting of Y, Ce, Sm, Eu, Al, La, Gd, Lu, Ga and In.

Further, the b in Formula (1) is preferably in a range of $0 \leqq b \leqq 10^{-2}$.

Further, the A in Formula (1) is preferably at least one kind of metal selected from a group consisting of Eu, Cs, Sm, Tl and Na.

The photostimulable phosphor preferably comprises a columnar crystal.

The columnar crystal preferably comprises a photostimulable phosphor represented by the following Formula (2) as a main component,

Formula (2)

CsX: A

wherein the X represents Br or I, and A represents Eu, In, Ga or Ce.

According to the second aspect of the present invention, by sealing a photostimulable phosphor layer formed by vapor phase deposition with an organic film and a deposited film, a radiographic image conversion panel improved in moisture-proof property without reducing image quality such as sharpness and the like can be obtained. Therefore, a radiographic image conversion panel having a long life period, that is, capable of being used in a preferable state for a long period of time can be provided.

BRIEF DESCRIPTION OF THE DRAWINGS

The present invention will become more fully understood from the detailed description given hereinbelow and the appended drawings. However, these are not intended as a definition of the limits of the present invention, and wherein;

FIG. 1 is a view showing a radiographic image conversion panel as an example of the embodiment of the present invention;

FIG. 2 is a view showing a state of forming a photostimulable phosphor layer on a support by a deposition method;

FIG. 3 is a view showing a relation between the luminance and the heat treatment temperature and time in the photographic image conversion panel of Example of the present invention.

FIG. 4 is a cross-sectional view showing one example of a photographic image conversion panel sealed against moisture by covering it with a metal oxide-deposited film.

FIG. 5 is a view showing a state of forming a photostimulable phosphor layer on a support by deposition.

FIG. 6 is a construction view showing one example of the deposition apparatus used for the deposition of a polyparaxylylene film according to the present invention.

FIG. 7 is a schematic view of a deposition room of the deposition apparatus in FIG. 6.

FIG. 8 is a view showing a supporting state of a support on a turn table of the deposition apparatus in FIG. 6.

FIG. 9 is a view showing a state where a photostimulable phosphor layer comprising a columnar crystal is formed on a support by a vapor phase deposition method.

FIG. 10 is a view showing a state where a support having a photostimulable phosphor layer comprising a columnar crystal is integrally covered with a polyparaxylylene film.

FIG. 11 is a schematic view showing a use example of the radiographic image conversion panel of the present invention.

FIG. 12 is a view showing an outline of a vapor phase deposition apparatus forming a photostimulable phosphor layer on a support.

PREFERRED EMBODIMENTS OF THE INVENTION

Examples of the embodiments of the present invention will be described in detail below.

First Embodiment:

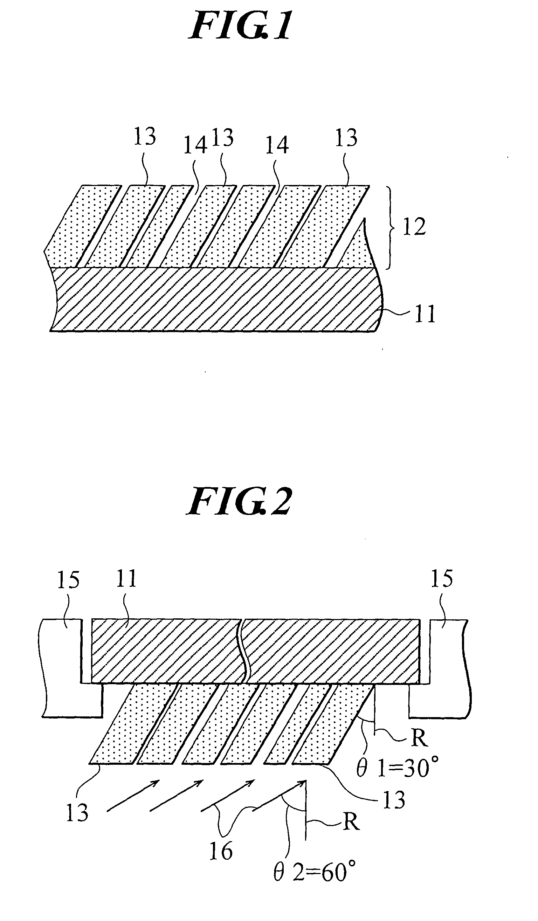

As shown in FIG. 1, in a radiographic image conversion panel as an example the first embodiment of the present invention, a photostimulable phosphor layer 12 comprising columnar crystals 13 of a photostimulable phosphor and a void 14 formed among the columnar crystals 13 is formed on the whole surface of a support 11 in a thickness of 50 μm or more, preferably from 300 to 500 μm by a vapor phase deposition method and a protective layer for protecting the photostimulable phosphor layer is provided according to need.

As the support 11, a resin impregnated carbon fiber (a carbon fiber reinforced resin) can be used and specific examples of the carbon fiber include a commercially available carbon fiber (an epoxy resin impregnated carbon fiber, #132, produced by Toho Rayon Co., Ltd.). Further, as the support of the conventional radiographic image conversion panel, a material having thermal resistance can be arbitrarily selected from commonly known materials. A quarts glass sheet, a metal sheet comprising aluminum, iron, tin and chrome, etc. and a resin sheet comprising aramid, etc., or a sheet in combination thereof can be used.

As for the photostimulable phosphor preferably used in the present invention, one represented by Formula (1) can be used,

Formula (1)

$$M^1X \cdot aM^2X_2' \cdot bM^3X_3'':eA$$

In this formula, the $M^1$ is at least one kind of alkali metal selected from a group consisting of Li, Na, K, Rb and Cs, particularly preferably at least one kind of alkali metal selected from a group consisting of K, Rb and Cs.

The $M^2$ is at least one kind of divalent metal selected from a group consisting of Be, Mg, Ca, Sr, Ba, Zn, Cd, Cu and Ni, particularly preferably at least one kind of divalent metal selected from a group consisting of Be, Mg, Ca, Sr and Ba.

The $M^3$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, particularly preferably at least one kind of trivalent metal selected from a group consisting of Y, La, Ce, Sm, Eu, Gd, Lu, Al, Ga and In.

Each of the X, the X' and the X" is at least one kind of halogen selected from a group consisting of F, Cl, Br and I, the X is particularly preferably at least one kind of halogen selected from a group consisting of Br and I.

The A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, particularly preferably at least one kind of metal selected from a group consisting of Eu, Cs, Sm, Tl and Na.

Each of the a, the b and the e represents a numeric value in a range of $0 \leqq a < 0.5$, $0 \leqq b < 0.5$ and $0 < e \leqq 0.2$, and the b particularly preferably represents a numeric value in a range of $0 \leqq b \leqq 10^{-2}$.

Further, the above-described columnar crystal 13 preferably has a photostimulable phosphor represented by the following Formula (2) :

Formula (2)

CsX: A

wherein the X represents Br or I, and the A represents Eu, In, Ga or Ce.

The above-described photostimulable phosphor is manufactured by a manufacturing method described below, for example, using the following phosphor raw materials of (a) to (d):

(a) at least one or two or more kinds of compounds selected from a group consisting of LiF, LiCl, LiBr, LiI, NaF, NaCl, NaBr, NaI, KF, KCl, KBr, KI, RbF, RbCl, RbBr, RbI, CsF, CsCl, CsBr and CsI;

(b) at least one or two or more kinds of compounds selected from a group consisting of $BeF_2$, $BeCl_2$, $BeBr_2$, $BeI_2$, $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $BaF_2$, $BaCl_2$, $BaBr_2$, $BaI_2$, $ZnF_2$, $ZnCl_2$, $ZnBr_2$, $ZnI_2$, $CdF_2$, $CdCl_2$, $CdBr_2$, $CdI_2$, $CuF_2$, $CuCl_2$, $CuBr_2$, $CuI_2$, $NiF_2$, $NiCl_2$, $NiBr_2$ and $NiI_2$;

(c) at least one or two or more kinds of compounds selected from a group consisting of $ScF_3$, $ScCl_3$, $ScBr_3$, $ScI_3$, $YF_3$, $YCl_3$, $YBr_3$, $YI_3$, $LaF_3$, $LaCl_3$, $LaBr_3$, $LaI_3$, $CeF_3$, $CeCl_3$, $CeBr_3$, $CeI_3$, $PrF_3$, $PrCl_3$, $PrBr_3$, $PrI_3$, $NdF_3$, $NdCl_3$, $NdBr_3$, $NdI_3$, $PmF_3$, $PmCl_3$, $PmBr_3$, $PmI_3$, $SmF_3$, $SmCl_3$, $SmBr_3$, $SmI_3$, $EuF_3$, $EuCl_3$, $EuBr_3$, $EuI_3$, $GdF_3$, $GdCl_3$, $GdBr_3$, $GdI_3$, $TbF_3$, $TbCl_3$, $TbBr_3$, $TbI_3$, $DyF_3$, $DyCl_3$, $DyBr_3$, $DyI_3$, $HoF_3$, $HoCl_3$, $HoBr_3$, $HoI_3$, $ErF_3$, $ErCl_3$, $ErBr_3$, $ErI_3$, $TmF_3$, $TmCl_3$, $TmBr_3$, $TmI_3$, $YbF_3$, $YbCl_3$, $YbBr_3$, $YbI_3$, $LuF_3$, $LuCl_3$, $LuBr_3$, $LuI_3$, $AlF_3$, $AlCl_3$, $AlBr_3$, $AlI_3$, $GaF_3$,

$GaCl_3$, $GaBr_3$, $GaI_3$, $InF_3$, $InCl_3$, $InBr_3$ and $InI_3$; and
(d) at least one or two or more kinds of metals selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg.

The phosphor raw materials in the above-described (a) to (d) are weighed so as to satisfy each range of the a, the b and the e of Formula (1) , and are mixed with pure water. In this case, they may be mixed sufficiently by using a mortar, ball mill, mixer mill or the like.

Then, after a predetermined acid is added so as to adjust the pH value C of the obtained mixed solution into $0<C<7$, the moisture is evaporated and vaporized.

Next, the obtained raw material mixture is filled in a heat-proof container such as a quartz crucible, an alumina crucible or the like, and calcining is performed in an electric furnace. The calcining temperature is preferably from 500 to $1000°C$. The calcining time differs according to the filling amount, calcining temperature and the like of the raw material mixture, however, preferably from 0.5 to 6 hours.

As calcining atmosphere, mild reducing atmosphere such as nitrogen gas atmosphere including a small amount of hydrogen gas, carbon acid gas atmosphere including a small amount of carbon monoxide, and the like; neutral atmosphere such as nitrogen gas atmosphere, argon gas atmosphere and the like; or mild oxidizing atmosphere including a small amount of oxygen gas is preferable.

In addition, once after calcining is performed with the above-described calcining conditions, the calcined material is taken out from the electric furnace to be crushed. Thereafter, the powders of the calcined material are again filled in the heat-proof container, are put into the electric furnace, and if re-calcining is performed with the same calcining conditions as above, the luminescence luminance of photostimulable phosphor can be made higher. Further, in case of cooling the calcined material from the calcining temperature to room temperature, a desired photostimulable phosphor can also be obtained by taking the calcined material out of the electric furnace and cooling it in air. However, it may be cooled under remaining mild reducing atmosphere, neutral atmosphere or mild oxidizing atmosphere which is the same as at the time of calcining.

Further, the luminescence luminance of the obtained photostimulable phosphor according to stimulation can be made further higher by making the calcined material move from a heating section to a cooling section in the electric furnace, and by cooling it rapidly under mild reducing atmosphere, neutral atmosphere or mild oxidizing atmosphere.

A photostimulable phosphor layer is formed by using a vapor phase deposition method where the above-described photostimulable phosphor is deposited on one surface of the support 11.

As the vapor phase deposition method, a deposition method, sputtering method, CVD method, ion plating method and the like can be used.

In the deposition method, at first, a support is placed in a deposition apparatus, and air in the deposition apparatus is discharged so as to obtain a degree of vacuum of approximately 1. $333 \times 10^{-4}$ Pa.

Next, at least one of the above-described photostimulable phosphors is heated and evaporated by a method such as resistive heating, electron beam method or the like, and the photostimulable phosphor is grown to a desired thickness on the surface of the support.

As a result, a photostimulable phosphor layer without containing a binder is formed. However, in the above-described deposition step, it is possible to form a photostimulable phosphor layer in plural numbers.

Further, in the above-described deposition step, it is possible to co-deposit by using a plurality of resistance heaters or electron beams and to form a photostimulable phosphor layer simultaneously by synthesizing the aimed photostimulable phosphor on the support.

In the sputtering method, similar to the deposition method, a support is placed in a sputtering apparatus, and air in the apparatus is discharged so as to obtain a degree of vacuum of approximately 1.333 $\times$ $10^{-4}$ Pa. Next, inert gas such as Ar, Ne or the like is introduced into the sputtering apparatus as gas for sputtering, and a gas pressure is made to approximately 1.333 $\times$ $10^{-1}$ Pa. Next, sputtering is performed by using the photostimulable phosphor as a target, and the photostimulable phosphor layer is grown to a desired thickness on the support.

The film thickness of the photostimulable phosphor layer changes according to the intended use of the radiographic image conversion panel or according to the types of the photostimulable phosphor, however, 50 μm or more, preferably, from 300 to 500 μm.

In manufacturing of a photostimulable phosphor layer according to the above-described vapor phase deposition method, the temperature of the support on which the photostimulable phosphor layer is formed is preferably set to $50°C$ to $400°C$. It is preferably $100°C$ to $250°C$ in terms of characteristics of the phosphor. In the case of using a resin as a support, it is preferably $50°C$ to $150°C$, more preferably $50°C$ to $100°C$ in consideration of heat resistance of the resin.

FIG. 2 is a view showing a state where the photostimulable phosphor layer 12 is formed on the support by the deposition. Assuming that an incident angle of a photostimulable phosphor steam flow 16 to the normal line direction (R) of the support 11 face fixed on a support holder 15 is $\theta_2$ (60 degrees in the figure) and an angle of the formed columnar crystal 13 to the normal line direction (R) of the support face is $\theta_1$ (30 degrees in the figure), experientially the $\theta_1$ becomes about half of the $\theta_2$ and the columnar crystal 13 is formed at this angle.

Furthermore, a filling material such as a binder or the like may be filled in voids 14 formed among columnar crystals 13. Further, materials of reinforcement of the photostimulable phosphor layer 12, materials having high optical absorption and materials having high optical reflectance may be filled. Thereby, the reinforcement effect can be obtained, and moreover, it is effective to reduce optical dispersion in the transverse direction of the photostimulated excitation light which entered the photostimulable phosphor layer 12.

In the sputtering step, similar to the deposition method, various application treatments can be used. The same is true also in the CVD method, the ion plating method or other methods.

Further, the growth rate of the photostimulable phosphor layer in the above-described vapor phase deposition method is preferably from 0.05 µm/min to 300 µm/min. When the growth rate is less than 0. 05 µm/min, the productivity of the radiographic image conversion panel becomes poor, so that it is not preferable. Further, when the growth rate exceeds 300 µm/min, it becomes difficult to control the growth rate, so that it is not preferable.

The present invention is characterized in that heat treatment is performed at a high temperature, to the radiographic image conversion panel having the photostimulable phosphor layer formed by using the above-described vapor phase deposition method. The heat treatment is performed at from 80°C to 300°C, more preferably, from 100°C to 200°C.

The heat-treating time depends on a temperature, however, the heat treatment is preferably performed for from 1 to 10,000 min. It is preferable that the heat treatment is performed for approximately from 1, 000 to 2, 000 min at 100°C, and for approximately from 20 to 30 min at 200°C.

The heat treatment method is not particularly limited, and any method may be used as long as a temperature-controlled room is used where the support having formed thereon the photostimulable phosphor layer can be perfectly stored and a temperature and humidity can be controlled.

After the heat treatment is performed as described above, a protective layer is provided to the opposite side of the side of the support where the photostimulable phosphor layer is formed, according to need. The protective layer may be formed by applying application liquid for a protective layer directly on the surface of the photostimulable phosphor layer, or a protective layer formed separately beforehand may be adhered to the photostimulable phosphor layer.

As the material for the protective layer, a regular material for protective layer such as cellulose acetate, nitrocellulose, polymethyl methacrylate, polyvinyl butyral, polyvinyl formal, polycarbonate, polyester, polyethylene terephthalate, polyethylene, polyvinylidene chloride, nylon, polytetrafluoroethylene, polytrifluoro-ethylene chloride, tetrafluoroethylene-hexafluoropropylene copolymer, vinylidene chloride-vinyl chloride copolymer, vinylidene chloride-acrylonitrile copolymer or the like is used. Besides these, a transparent glass substrate can be used as a protective layer.

Further, the protective layer may be formed by laminating inorganic materials such as SiC, $SiO_2$, SiN, $Al_2O_3$ and the like by a deposition method, a sputtering method or the like.

The layer thickness of these protective layers is, preferably, from 0.1 to 2,000 µm.

EXAMPLES

Hereinafter, the present invention will be explained in detail below by referring to Examples. However, the present invention is not limited to these Examples.

<Preparation of Radiographic Image Conversion Panel Samples>

While carrying a carbon fiber (#132, produced by Toho Rayon Co., Ltd.) having a film thickness of 1 mm at a carrier speed of 1.0 m/min, a pressure of $4.9 \times 10$ N/cm$^2$ was applied to a carrier heat roll to obtain a substrate as a support. On one surface of the support, a photostimulable phosphor (CsBr:Eu) was deposited to form a photostimulable phosphor layer.

Incidentally, in the deposition, the distance between the support and a slit was made to be 60 cm. Then, by using a slit made of aluminum, deposition was performed by carrying the substrate toward the direction parallel to the longitudinal direction of the substrate so as to obtain a photostimulable phosphor layer having a thickness of 300 µm.

In addition, in performing deposition, the support was placed in a deposition apparatus. Then, press molding was performed by using the phosphor raw material (CsBr:Eu) as the evaporation source, and the support was charged in a water-cooled crucible.

Thereafter, the air inside of the deposition apparatus was once discharged, and $N_2$ gas was introduced. After the degree of vacuum was adjusted to 0.133 Pa, the photostimurable phosphor layer was deposited by keeping the temperature of the support at from 50°C to 100°C. The deposition was terminated when the film thickness of the photostimulable phosphor layer became 500 µm.

After the deposition of the photostimulable phosphor layer was terminated, the photostimulable phosphor layer was heat treated with the support at each temperature of 80°C, 100°C, 150°C, 200°C, 300°C and 400°C in dry air or $N_2$ atmosphere.

<Evaluation of Luminescence Luminance>

The luminance was evaluated by using the Regius 350 produced by Konica Corporation. The amount of light emitted from each radiographic image conversion panel sample after irradiating an X-ray was measured and compared with the amount of light emitted from the radiographic image conversion panel sample not heat treated.

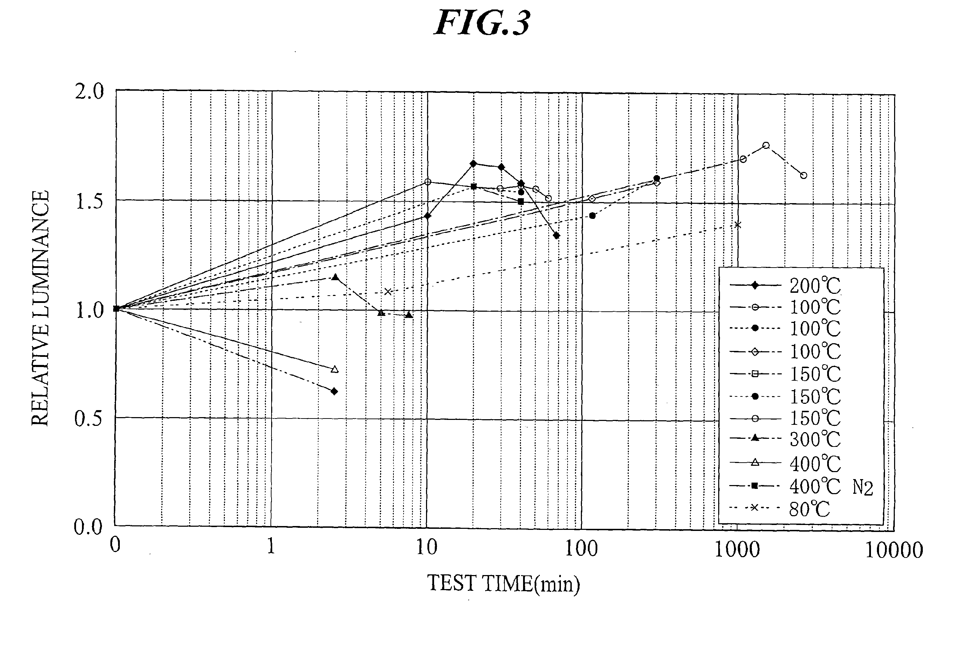

FIG. 3 shows the heat treatment temperature and time, and changes of luminance.

A sample heat treated in an air atmosphere at 80°C for 60 min showed the luminance as high as 1.1 times that of a sample not heat treated. Further, a sample heat treated in an air atmosphere at 80°C for 1,000 min showed the luminance as high as 1.4 times that of a sample not heat treated.

A sample heat treated in an air atmosphere at 100°C for 1,000 min showed the luminance as high as 1.8 times that of a sample not heat treated, however, a sample heat treated for 2,000 min was reduced in the luminance.

A sample heat treated in an air atmosphere at 150°C for 20 min showed the luminance as high as 1.6 times that of a sample not heat treated, however, a sample heat treated for 40 min was reduced in the luminance.

A sample heat treated in an air atmosphere at 200°C for 5 min showed the luminance as high as 1.3 times that of a sample not heat treated. A sample heat treated in an air atmosphere at 200°C for 20 min showed the luminance as high as 1.6 times that of a sample not heat treated, however, a sample heat treated for 60 min was reduced in the luminance and showed the luminance as high as 1.4 times that of a sample not heat treated.

In addition, a sample heat treated in an air atmosphere at 300°C for 2.5 min showed the luminance as high as 1.2 times that of a sample not heat treated, however, when the sample was heat treated for 5 min or more, the luminance was lowered.

When a sample was heat treated in an air atmosphere at 400°C for 2.5 min, the sample showed the luminance as high as 0.7 times that of a sample not heat treated. When a sample was heat treated in an $N_2$ atmosphere at 400°C for 2.5 min, the sample showed the luminance as high as 0.6 times that of a sample not heat treated.

As described above, it is found that a sample heat treated at a temperature of from 80°C to 300°C after forming a photostimulable phosphor on a support by a vapor phase deposition method is increased in the luminance as compared with a sample not heat treated.

Further, as heat treatment is performed at a higher temperature, a shorter heat treatment time is required, however, when the heat treatment is performed at a temperature higher than 300°C, the luminance decreases inversely. In addition, there is the possibility that when the heat treatment is performed for excessive amount of time, the luminance is similarly lowered.

Second Embodiment:

The second embodiment to which the present invention is applied will be explained in detail below.

The present invention is that on a surface of a photostimulable phosphor layer where a photostimulable phosphor is formed on a support in a film thickness of 50 μm or more by a vapor phase deposition, an organic film having high water repellency is deposited and formed integrally with the support so as to cover the surface of the layer and then, the photostimulable phosphor layer and support having the organic film are sealed so as to integrally cover themby using a metal oxide-deposited film, whereby a radiographic image conversion panel having high moisture-proof property is obtained.

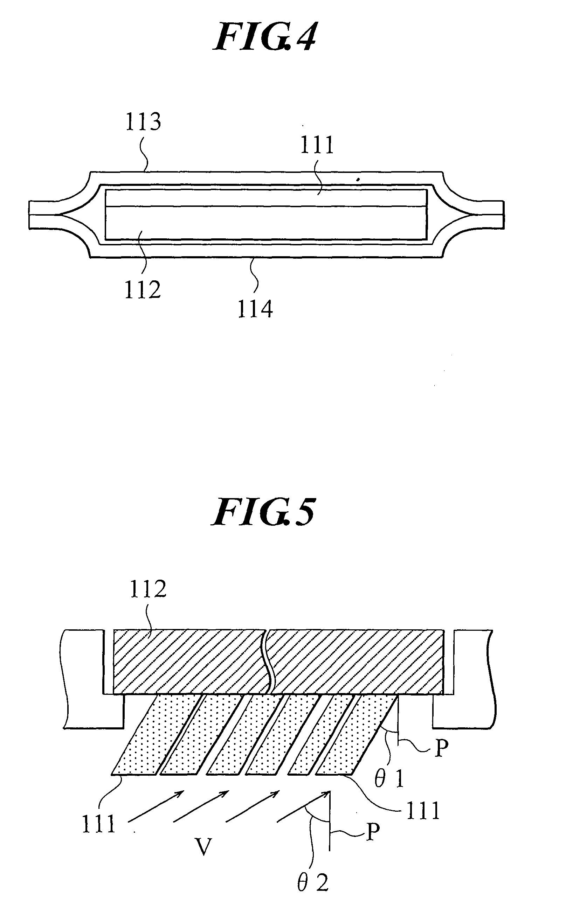

It is known that in order to prevent deterioration in performance of a radiographic image conversion panel due to moisture absorption of a photostimulable phosphor, a photostimulable phosphor layer and a support are sealed by covering them with a moisture-proof protective film to prevent invasion of moisture. For example, in the radiographic image conversion panel described in the above-described patent document 1 (Japanese Patent Laid-Open Publication No. Hei 11-344598), as shown in FIG. 4, a support 112 having a photostimulable phosphor layer 111 is integrally covered with a moisture-proof protective films 113 and 114 comprising a metal oxide-deposited resin film so as to seal the layer against moisture.

By this sealing method, off course, an effect is brought about, however, it is verified that in such a sealing method, the reduction in photostimulated luminescence characteristics of a phosphor due to water absorption cannot be sufficiently suppressed and sufficient durable years cannot be obtained, though these features are remarkable, for example, in an alkali halide-based photostimulable phosphor, in particular, a CsBr or I system phosphor having high deliquescence. It is considered that this is because deliquescence of the above-described photostimulable phosphor is particularly large, and in addition, the reduction in the photostimulated luminescence characteristics of the phosphor due to water absorption is also large.

A means of increasing the number of films where a metal oxide such as silica or alumina is deposited, or a means of increasing the film thickness of the metal oxide film in order to enhance moisture-proof property causes reduction in sharpness. Accordingly, a method for improving moisture-proof property without causing reduction in image quality such as sharpness is required. Further, as a source of gradually accelerating the deterioration in performance of a radiographic image conversion panel, it is considered that the surface of a photostimulable phosphor columnar crystal formed by a vapor phase deposition method is not actually smooth and also, voids, etc. are present among the columnar crystals and therefore, the subtle voids intervening between the above-described moisture-proof protective film and the crystal surface inhibit adhesion therebetween.

Accordingly, in the present invention, when a support (a photostimulable phosphor plate) having formed thereon a photostimulable phosphor layer is sealed by use of a metal oxide-deposited film (a moisture-proof protective film) , an organic film having a film thickness of from 0.5 to 60 µm, preferably from 1.0 to 40 µm is formed by a CVD method so as to integrally cover the whole face of the photostimulable phosphor layer columnar crystal surface and the support plate, and after the formation of the organic film, sealing is performed by the above-described metal oxide-deposited film (having a metal oxide film).

As the organic film, a polyparaxylylene film having high moisture-proof performance is preferable. The polyparaxylylene film can be formed by deposition using a CVD method (a vapor phase growth method).

Accordingly, in the present invention, a photostimulable phosphor layer is formed on a support such as glass or the like by a vapor phase deposition method, and the support (a photostimulable phosphor plate) having formed thereon the photostimulable phosphor layer is introduced into a CVD apparatus. Then, by using a CVD method (a vapor phase growth method), the photostimulable phosphor plate is covered with a polyparaxylylene film by deposition so as to integrally cover the photostimulable phosphor layer surface and the support plate rear surface. Thereafter, the above-described metal oxide-deposited films (the moisture-proof protective films) are laminated on the upper surface and lower surface of the photostimulable phosphor plate and thereby, integrally sealing the plate.

As the organic film, a polyparaxylylene film is preferred as described above, specifically, a xylylene resin organic film such as polyparaxylylene, polymonochloroxylylene, polydichloroxylylene or the like is preferred. In a xylylene film having a film thickness of approximately 10 µm, the permeability of vapor is extremely low and moreover, the spectral transmittance is high and also the absorption of photostimulated luminescence light is small.

A photostimulable phosphor layer formed by a vapor phase deposition method has a columnar shape, and the surface of the phosphor layer has voids and the like among the columnar crystals and also is not perfectly smooth. Therefore, sealing only by use of the moisture-proof protective film had a problem in adhesion to the moisture-proof protective film. However, more even adhesion is performed by such a formation of the organic film according to the CVD method.

The above-described metal oxide-deposited film is such a film that at least one layer or more of metal oxide films is deposited and formed in a thickness of 1 Å to 100 Å on a resin film having a thickness of 1 to 30 µm. Examples of the film include a resin film composed of polyethylene terephthalate (PET), where an inorganic oxide layer composed of silica or alumina is formed by deposition and the moisture-proof property is enhanced. These films are inexpensive and are excellent in workability or transparency, and moisture-proof property and oxygen permeability thereof are hardly affected by temperature or moisture. Therefore, they are suitable for a moisture-proof protective film for medical photostimulable phosphor plate where a stable image quality is demanded irrespective of the environment. In recent years, these deposited films are transparent and therefore, the content can be confirmed, and they have high thermal stability and therefore, retort sterilization can be performed. By utilizing such an advantage that the content can be heated by an electronic oven, the films have become popular in place of an opaque aluminium laminate film predominantly in a food field.

Examples of the metal oxide-deposited film include VMPET and the like as an alumina deposited PET (a polyethylene terephthalate) , and these are available from Toyo Metallizing Co.,Ltd and the like.

In the above-described metal oxide-deposited film for use in the present invention, moisture-proof property can be further improved by using a film having a plurality of different deposition layers or laminating a plurality of films, depending on moisture-proof property required.

Further, in the present invention, it is also preferable that in order to allow the above-described deposited film to have a function as a protective layer or have other functions, or in order to further enhance moisture-proof property, two kinds or more of other resin films having a different material, for example, a resin film of polyethylene terephthalate, polyethylene naphthalate, nylon or the like are laminated on the metal oxide-deposited film and thereby using the film as a moisture-proof protective film. The lamination method in this case includes a method such as dry lamination, extrusion lamination or co-extrusion coating lamination.

As for a method for laminating the above-described deposited film and other resin films, the dry lamination system is excellent in terms of workability. In this method, a curable adhesive layer having a thickness of approximately 1.0 to 2. 5 µm is generally used, however, a thickness of the adhesive layer must be more than 2.5 µm. However, when the coated amount of the adhesive is too large, tunnel, exudation, fine wrinkles or the like may occur. Therefore, the adhesive amount is preferably adjusted to have a dry film thickness of 3 to 5 µm.

In order to laminate resin films, a hot melt lamination method, an extrusion lamination method and a co-extrusion lamination method can also be used, and the methods may be used in combination with the above-described dry lamination system.

The hot melt lamination method is a method for melting a hot melt adhesive and coating an adhesive layer on a substrate. In the method, a thickness of the adhesive layer can be generally set in a wide range of 1 to 50 $\mu$m. As a base resin of a commonly used hot melt adhesive, EVA, EEA, polyethylene, butyl rubber or the like is used. A rosin, a xylene resin, a terpene resin, a styrene resin or the like is added as a tackifier. Wax or the like is added as a plasticizer.

The extrusion lamination method is a method where a resin melted at a high temperature is coated on the substrate by use of die. The thickness of a resin layer can be generally set in a wide range of 10 to 50 $\mu$m.

As a resin used in the extrusion lamination method, LDPE, EVA, PP or the like is generally used, and an adhesion accelerator is previously coated on a substrate to increase adhesiveness to the substrate in some cases.

As the adhesive accelerator, an organic titanium one, a polyethyleneimine one, an isocyanate-based one, a polyester one, and the like are used. In general, these adhesive accelerator layers are coated for the purpose of forming a fine concavoconvex on the surface of a substrate film and improving diffusivity of a melting polymer. These adhesive accelerators are not included in the curable adhesive layer having a thickness of 2.5 $\mu$m or less represented in the present invention.

The co-extrusion lamination method means that the same or different thermoplastic resins each is extruded from two or more extruders at the same time, laminated inside or outside the die specially designed and a multilayer film is formed concurrently with film formation.

The resins commonly used in the co-extrusion lamination method include LDPE (low density polyethylene), Ny (nylon), ION (ionomer), PP (polypropylene), EVA (ethylene-vinyl acetate), HDPE (high density polyethylene), MDPE (medium density polyethylene), PVDC (polyvinylidene chloride), POL (polyolefin) and the like.

In such a manner, in the radiographic image conversion panel of the present invention, a laminated film formed by adhering like a layer a plurality of resin films containing a metal oxide-deposited film is used as a moisture-proof protective film in order to seal and protect a photostimulable phosphor plate against moisture. In the case of the laminated film, as an adhesive layer adhering between a film having a metal oxide layer and another resin film or between a plurality of metal oxide-deposited films, it is preferable to use a curable adhesive layer having a thickness of 2.5 $\mu$m or less and accompanying a crosslinking reaction due to heat or an ultraviolet ray, specifically, a two-liquid reactive adhesive layer using a mixture of a main agent and a curing agent or a one-liquid reactive vinyl, acrylic, polyamide, epoxy, rubber, or urethane adhesive layer having a reactive group in a molecular structure. In general, these adhesives are frequently used by the dry lamination system.

However, a hot melt type adhesive is not included in a curable adhesive layer represented herein except for an adhesive which is curable with time.

The thickness of these moisture-proof protective films is practically from 1 $\mu$m to 300 $\mu$m. In order to obtain preferable moisture resistance and shock resistance, the thickness is preferably 5 $\mu$m or more. In particular, it is more preferable to seal a plate with a moisture-proof protective film having a thickness of 10 $\mu$m or more, because a conversion panel having excellent durability and tolerability can be obtained.

However, on the other hand, when using the laminated film as a moisture-proof film, it is also important not to increase the film thickness so much in terms of sharpness. In order to use the film in the range where the sharpness is not lowered, the thickness of the whole moisture-proof protective film containing a metal oxide-deposited film is 300 $\mu$m or less, preferably 150 $\mu$m or less.

In order to effectively transmit photostimulated excitation light and photostimulated luminescence, the moisture-proof protective film desirably shows high transmittance in a wide wavelength range, and the transmittance is 60% or more, preferably 80% or more.

Further, it is preferable to provide an antireflective layer such as $MgF_2$ on the surface, because photostimulated excitation light and photostimulated luminescence are effectively transmitted and moreover, an effect of reducing the deterioration of sharpness is exerted.

In addition, in order to improve sharpness, for example, a coloring material such as lead phosphate or the like may be incorporated into a moisture-proof protective film for coloring and give it a function of absorbing photostimulated excitation light.

For that purpose, there is a method for laminating a film colored with a coloring material (a pigment or a dye) absorbing photostimulated excitation light on the above-described metal oxide-deposited film and also, there is a method for providing a layer containing a dye or a pigment on either face by means of coating.

As a production method of a colored film, there is a method for forming a plastic film where a coloring material is mixed or forming a layer containing a coloring material (a pigment or a dye) on the surface of a plastic film by means of coating or the like. The coloring can be performed by a method for uniformly laminating a colored plastic film to a moisture-proof protective film by using an adhesive or the like.

<Photostimulable Phosphor>

As a photostimulable phosphor forming a photostimulable phosphor layer, for example, there are a bivalent europium activated composite halide phosphor and the like described in Japanese Patent Laid-Open Publication No. Sho 61-236890 are used. For example, an iodine-containing rare earth element activated rare earth oxyhalide phosphor, in particular, an Eu added BaFI compound photostimulable phosphor can be given. As the photostimulable phosphor preferably used in the radiographic image conversion panel of the present invention, for example, a phosphor represented by $BaSO_4$:Ax described in Japanese Patent Laid-Open Publication No. Sho 48-80487, a phosphor represented by $MgSO_4$:Ax described in Japanese Patent Laid-Open Publication No. Sho 48-80488, a phosphor represented by $SrSO_4$:Ax described in Japanese Patent Laid-Open Publication No. Sho 48-80489, a phosphor obtained by adding at least one kind of Mn, Dy and Tb to $Na_2SO_4$, $CaSO_4$, $Ba\ SO_4$, etc. , described in Japanese Patent Laid-Open Publication No. Sho 51-29889, a phosphor represented by BeO, LiF, $MgSO_4$, $CaF_2$, etc., described in Japanese Patent Laid-Open Publication No. Sho 52-30487, a phosphor represented by $Li_2B_4O_7$: Cu, Ag, etc., described in Japanese Patent Laid-Open Publication No. Sho 53-39277, a phosphor represented by $Li_2O\cdot(Be_2O_2)x$: Cu, Ag, etc., described in Japanese Patent Laid-Open Publication No. Sho 54-47883, and a phosphor represented by SrS: Ce, Sm, SrS: Eu, Sm, $La_2O_2S$: Eu, Sm and (Zn, Cd) S: Mnx described in U. S. Patent 3, 859, 527 can be given. Further, a phosphor represented by ZnS: Cu, Pb, a barium aluminate phosphor represented by formula $BaO\cdot xAl_2O_3$: Eu and an alkali earth metal silicate phosphor represented by formula $M(II)O\cdot xSiO_2$: A described in Japanese Patent Laid-Open Publication No. Sho 55-12142 can be given.

Further, preferred examples may include an alkaline earth fluorohalide phosphor represented by formula $(Ba_{1-x-y}Mg_xCa_y)F_x$: $Eu^{2+}$ described in Japanese Patent Laid-Open Publication No. Sho 55-12143, a phosphor represented by formula LnOX: xA described in Japanese Patent Laid-Open Publication No. Sho 55-12144, a phosphor represented by formula $(Ba_{1-x}M(II)_x)F_x$: yA described in Japanese Patent Laid-Open Publication No. Sho 55-12145, a phosphor represented by formula BaFX: xCe, yA described in Japanese Patent Laid-Open Publication No. Sho 55-84389, a rare earth element activated bivalent metal fluorohalide phosphor represented by formula M(II)FX·xA: yLn and a phosphor represented by formula ZnS: A, CdS: A, (Zn, Cd)S: A, X described in Japanese Patent Laid-Open Publication No. Sho 55-160078, a phosphor represented by any one of the following formulae:

$$xM_3(PO_4)_2\cdot NX_2: yA$$

$$xM_3(PO_4)_2: yA$$

described in Japanese Patent Laid-Open Publication No. Sho 59-38278, a phosphor represented by any one of the following formulae:

$$nReX_3\cdot mAX'_2: xEu$$

$$nReX_3\cdot mAX'_2: xEu, ySm$$

described in Japanese Patent Laid-Open Publication No. Sho 59-155487, and a bismuth activated alkali halide phosphor represented by formula: M(I)X: xBi described in Japanese Patent Laid-Open Publication No. Sho 61-228400.

However, particularly preferred examples may include an alkali halide photostimulable phosphor represented by the following Formula (1), as described in Japanese Patent Laid-Open Publication No. Sho 61-72087, Japanese Patent Laid-Open Publication No. Hei 2-58000 and the like,

Formula (1)

$$M^1X\cdot aM^2X'_2\cdot bM^3X''_3: eA$$

wherein the $M^1$ is at least one kind of alkali metal selected from a group consisting of Li, Na, K, Rb and Cs, the $M^2$ is at least one kind of bivalent metal selected from a group consisting of Be, Mg, Ca, Sr, Ba, Zn, Cd, Cu and Ni, the $M^3$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, each of the X, the X' and the X" is at least one kind of halogen selected from a group consisting of F, Cl, Br and I, the A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, and each of the a, the b and the e represents a numeric value in a range of $0 \leqq a < 0.5$, $0 \leqq b < 0.5$ and $0 < e \leqq 0.2$.

In the Formula (1), the $M^1$ is preferably selected from a group consisting of K, Rb and Cs, and the X is preferably selected from a group consisting of Br and I.

The $M^2$ is preferably selected from a group consisting of Be, Mg, Ca, Sr and Ba, and the $M^3$ is preferably selected from a group consisting of Y, Ce, Sm, Eu, Al, La, Gd, Lu, Ga and In. Further, the b is preferably in a range of $0 \leqq b \leqq 0.01$ and the A is preferably selected from a group consisting of Eu, Cs, Sm, Tl and Na.

By forming a film of these alkali halide photostimulable phosphors on a substrate by a vapor phase deposition method, an elongated columnar crystal having a constant slope to a normal line direction of the substrate (of course, the crystal may have no slope but may be perpendicular to the substrate face) is formed. By forming such a columnar crystal, diffusion in the transverse direction of the photostimulated excitation light (or photostimulated luminescence) can be suppressed. Therefore, the sharpness of image due to the photostimulated luminescence is excellent when using the phosphors. Among the alkali halide photostimulable phosphors, RbBr and CsBr system phosphors are preferable because they have high luminance and therefore, the image quality becomes high.

In the present invention, among these, particularly preferred is a phosphor represented by the following Formula (2):

Formula (2)

CsX: A

wherein the X represents Br or I, and the A represents Eu, In, Ga or Ce.

Among these, particularly, the CsBr system phosphor is preferable because it has high luminance and therefore, the image quality becomes high, further, an effect of improving the substrate or an adhesive property with the substrate according to the production method of the present invention is also high.

Columnar crystals obtained by using these photostimulable phosphors, in other words, crystals where each of the crystals is grown like a column leaving a certain void therebetween, which are preferable in the present invention, can be obtained by the method described in Japanese Patent Laid-Open Publication No. Hei 2-58000 above.

More specifically, a photostimulable phosphor layer comprising independent elongated columnar crystals can be obtained by a method for supplying vapor of a photostimulable phosphor or the raw materials thereof on a substrate and subjecting the phosphor to a vapor phase growth (deposition) method such as deposition or the like.

For example, a photostimulable phosphor steam flow during deposition is made incident at an angle of 0 to 5 degrees with respect to the direction perpendicular to a substrate, whereby a columnar crystal appropriately perpendicular to the substrate face can be obtained.

In these cases, the shortest distance between a substrate and a crucible is suitably set to approximately from 10 cm to 60 cm in response to an average range of a photostimulable phosphor.

The photostimulable phosphor as an evaporation source is charged into the crucible by uniformly dissolving it or molding it by a press or a hot press. In this case, a degassing treatment is preferably performed. A method for evaporating the photostimulable phosphor from the evaporation source is performed by scanning of an electron beam emitted by an electron gun, however, the phosphor can also be evaporated by a method other than this method.

Further, the evaporation source is not necessarily a photostimulable phosphor, but may be a mixture of photostimulable phosphor raw materials.

Further, as for an activator, a mixture obtained by mixing an activator in a basic substance may be deposited, or an activator may be doped after depositing only a basic substance. For example, in the case of using CsBr as a basic substance, In as an activator may be doped after depositing only CsBr. In other wards, this is because since the crystals are independent, doping can be sufficiently performed even if the film is thick, and crystal growth hardly takes place and therefore, MTF is not lowered.

Doping can be performed by a thermal diffusion or ion implantation method where a doping agent (an activator) is doped into the formed phosphor basic substance layer.

<Phosphor layer thickness, crystal size and the like>

The layer thickness of the photostimulable phosphor layer comprising a columnar crystal formed by these methods changes according to the sensitivity to a radiation ray, the types of the photostimulable phosphor or the like of the aimed radiographic image conversion panel. However, the layer thickness is preferably selected from the range of 50 μm to 1,000 μm, more preferably from 50 μm to 800 μm.

In the photostimulable phosphor layer comprising these columnar crystals, the size of columnar crystals (the average of diameters in the cross sectional area of each columnar crystal in terms of a circle at the time of observing the columnar crystals from the face parallel to the substrate, and it is calculated from a microphotograph bringing at least 100 or more columnar crystals into view) is preferably approximately from 0.5 to 50 $\mu$m, further preferably from 0.5 to 20 $\mu$m in order to improve the modulation transfer function (MTF). More specifically, when the columnar crystal has a size of less than 0.5 $\mu$m, the MTF is lowered because the photostimulated excitation light is scattered due to the columnar crystal. When the columnar crystal has a size of 50 $\mu$m or more, the MTF is also lowered because the directivity of the photostimulated excitation light decreases.

As a method for vapor-phase growing (vapor-phase depositing) the photostimulable phosphor, a deposition method, a sputtering method and a CVD method can be used.

In the deposition method, a substrate (a support) is placed in a deposition apparatus, and air in the deposition apparatus is discharged and at the same time, an inert gas such as nitrogen or the like is introduced from an inlet so as to obtain a degree of vacuum of approximately 1.333 Pa to $1.33 \times 10^{-3}$ Pa. Next, at least one of the photostimulable phosphors is heated and evaporated by a method such as resistive heating, electron beam method or the like, and a photostimulable phosphor is deposited to a desired thickness on the surface of the support. As a result, a photostimulable phosphor layer without containing a binder is formed. In the above-described deposition step, it is possible to form a photostimulable phosphor layer in plural numbers. Further, in the above-described deposition step, it is possible to perform deposition by using a plurality of resistance heaters or electron beams. Further, in the deposition method, it is possible to deposit photostimulable phosphor raw materials by using a plurality of resistance heaters or electron beams and to form a photostimulable phosphor layer simultaneously by synthesizing the aimed photostimulable phosphor on the support. Moreover, in the deposition method, the substrate (the support) may be cooled or heated during the deposition, according to need. Further, heat treatment may be performed to the photostimulable phosphor layer after the deposition is terminated.

In the sputtering method, similar to the above-described deposition method, a substrate is placed in a sputtering apparatus, and air in the sputtering apparatus is discharged so as to evacuate air from the apparatus. Next, an inert gas such as Ar, Ne or the like is introduced into the apparatus as gas for sputtering, and a gas pressure is made to approximately 1.33 Pa to $1.33 \times 10^{-3}$ Pa. Next, sputtering is performed by using the photostimulable phosphor as a target, and the photostimulable phosphor is deposited to a desired thickness on the surface of the substrate. In this sputtering step, similar to the deposition method, it is possible to form a photostimulable phosphor layer in plural numbers, or it is possible to form a photostimulable phosphor layer by using each photostimulable phosphor and by sputtering simultaneously or sequentially the target. Further, in the sputtering method, it is possible to form the aimed photostimulable phosphor layer on a substrate by using a plurality of photostimulable phosphor raw materials as a target and by sputtering simultaneously or sequentially these materials. According to need, a reactive sputtering may be performed by introducing gas such as $O_2$, $H_2$ or the like. Moreover, in the sputtering method, the substrate may be cooled or heated during the sputtering according to need. Further, heat treatment may be performed to the photostimulable phosphor layer after the sputtering is terminated.

In the CVD method, an organic metal compound containing the aimed photostimulable phosphor or photostimulable phosphor raw material is decomposed with energy such as heat, high-frequency power, or the like, whereby a photostimulable phosphor layer without containing a binder is obtained on a substrate. In any case, the photostimulable phosphor layer can be vapor-phase grown to independent elongated columnar crystals having a specific slope to a normal line direction of the substrate.

These columnar crystals can be obtained by a method described in Japanese Patent Laid-Open Publication No. Hei 2-58000 as described above, more specifically, by a method for supplying steam of a photostimulable phosphor or the materials thereof on a substrate and subjecting the phosphor to a vapor phase growth (deposition) method such as deposition or the like.

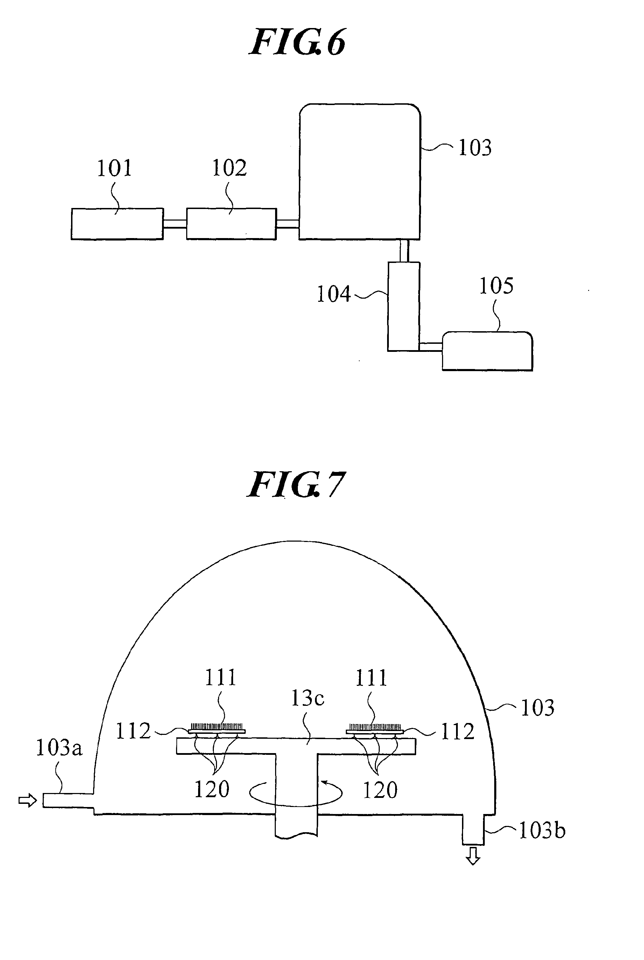

FIG. 5 is a view showing a state where a photostimulable phosphor layer is formed on a support 112 by deposition. The numeral 111 schematically shows the photostimulable phosphor layer comprising formed photostimulable phosphor columnar crystals. Assuming that an incident angle of a photostimulable phosphor steam flow V to a normal line direction (P) of the substrate face is $\theta_2$, an angle of the formed columnar crystal to the normal line direction (P) of the substrate face is represented by $\theta_1$. The columnar crystal is formed at a constant angle $\theta_1$ depending on the incident angle $\theta_2$. Each angle of the formed columnar crystals changes according to the photostimulable phosphor materials. For example, in the case of using a CsBr system phosphor which is particularly preferable in the present invention among alkali halide phosphors, a columnar crystal approximately perpendicular to the substrate face ($\theta_1$ is approximately 0 degree) can be obtained, for example, by allowing a photostimulable phosphor steam flow during deposition to enter at an angle of 0 to 5 degrees with respect to the direction perpendicular to the substrate, (that is, $\theta_2$ is from 0 to 5 degrees).

The photostimulable phosphor layer 111 formed on the substrate in such a manner does not contain any binder. Therefore, it is excellent in directivity, and the directivity of photostimulated excitation light and photostimulated luminescence is high. Thereby, it is possible to make the layer thickness thicker than the radiographic image conversion panel having a dispersion type photostimulable phosphor layer, in which a photostimulable phosphor is dispersed in a binder. Furthermore, since scattering of photostimulated excitation light in the photostimulable phosphor layer decreases, the sharpness of image is improved.

Further, a filling material such as a binder or the like may be filled in voids among columnar crystals so as to reinforce the photostimulable phosphor layer. Further, materials having high optical absorption, materials having high optical reflectance, and the like may be filled. Thereby, the above-described reinforcement effect can be obtained, and moreover, optical dispersion in the transverse direction of the photostimulated excitation light which entered the photostimulable phosphor layer can be almost completely prevented.

The materials having high optical reflectance mean the ones having high reflectance in response to the photostimulated excitation light (500 to 900 nm, particularly, 600 to 800 nm). For example, metals such as aluminum, magnesium, silver, indium and the like, white pigments and coloring materials from green to red region can be used.

The white pigments can also reflect photostimulated luminescence. As the white pigments, $TiO_2$ (anatase type, rutile type), $MgO$, $PbCO_3 \cdot Pb(OH)_2$, $BaSO_4$, $Al_2O_3$, M(II)FX (wherein M(II) is at least one of Ba, Sr and Ca and X is at least one of Cl and Br), $CaCO_3$, $ZnO$, $Sb_2O_3$, $SiO_2$, $ZrO_2$, lithopone ($BaSO_4 \cdot ZnS$), magnesium silicate, basic lead silicosulfate, basic lead phosphate, aluminum silicate and the like can be given. These white pigments have strong covering power and large refractive index. Therefore, the photostimulated luminescence can be scattered easily by reflecting and refracting light, so that it is possible to improve remarkably the sensitivity of the obtained radiographic image conversion panel.

Further, as the materials having high optical absorption, for example, carbon, chromium oxide, nickel oxide, iron oxide and the like, and coloring material of blue can be used. Among these, carbon also absorbs the photostimulated luminescence.

Further, the coloring materials may be either organic or inorganic coloring materials. As the organic system coloring materials, Zabon Fast Blue 3G (produced by Hoechst), Estrol Brill Blue N-3RL (produced by Sumitomo Chemical), D & C Blue No. 1 (produced by National Aniline), Spirit Blue (produced by Hodogaya Chemical), Oil Blue No. 603 (produced by Orient), Kiton Blue A (produced by Chiba-Geigy), Aizen Catiron Blue GLH (produced by Hodogaya Chemical), Lake Blue AFH (produced by Kyowa Sangyo), Primocyanine 6GX (produced by Inabata & Co.), Brill Acid Green 6BH (produced by Hodogaya Chemical), Cyan Blue BNRCS (produced by Toyo Ink), Lionoil Blue SL (produced by Toyo Ink) and the like are used. Further, organic system metal complex salt coloring materials such as color index Nos. 24411, 23160, 74180, 74200, 22800, 23154, 23155, 24401, 14830, 15050, 15760, 15707, 17941, 74220, 13425, 13361, 13420, 11836, 74140, 74380, 74350, 74460 and the like can be given. As the inorganic system coloring materials, permanent blue, cobalt blue, cerulean blue, chromium oxide, $TiO_2$-ZnO-Co-NiO system pigments can be given.

<Support>

The support (substrate) used for the radiographic image conversion panel of the present invention is preferably low in water permeability, and various glasses, polymeric materials, metals and the like are used. For example, plate glasses such as quartz, borosilicate, chemically-strengthened glasses and the like, plastic films such as cellulose acetate film, polyester film, polyethylene terephthalate film, polyamide film, polyimide film, triacetate film, polycarbonate film and the like, metal sheets such as aluminum sheet, iron sheet, copper sheet and the like, or metal sheets having a coating layer of the metal oxide are preferable. The surface of these supports may be smooth, or may be mat in order to improve the adhesiveness with the photostimulable phosphor.

Further, in the present invention, in order to improve the adhesiveness of the substrate and the photostimulable phosphor, an adhesive layer may be provided on the surface of the substrate beforehand according to need.

The thickness of these substrates differs according to the materials and the like of the substrate to be used. However, generally, it is from 80 μm to 2, 000 μm. From viewpoint of handling, from 80 μm to 1,000 μm is further preferable.

Further, among alkali halide photostimulable phosphors, RbBr system and CsBr system phosphors are preferable because they have high luminance and therefore, the image quality becomes high.

These phosphor columnar crystals formed by a vapor phase deposition method are easily affected by water. Therefore, in the present invention, an organic film covering the surface of the photostimulable phosphor and integrally covering the whole photostimulable phosphor plate is deposited and formed before sealing the plate by using a waterproof protective film containing a film having the metal oxide-deposited layer.

The production of an organic film by a CVD method on a photostimulable phosphor plate comprising a support having formed thereon a photostimulable phosphor layer by a vapor phase growth method will be explained below by referring to figures. FIG. 6 is a construction view showing an example of a deposition apparatus for use in deposition of a polyparaxylylene film according to the present invention.

The deposition apparatus comprises a vaporization room 101 for charging and vaporizing a diparaxylylene as a raw material of polyparaxylylene, a thermal decomposition room 102 for radicalizing the vaporized diparaxylylene by elevating the temperature under heat, a deposition room 103 for depositing the radicalized diparaxylylene on a photostimulable phosphor plate, a cooling room 104 for performing deodorization and cooling, and a discharging system 105 having a vacuum pump. Here, as shown in FIG. 6, the deposition room 103 has an inlet 103a for introducing the polyparaxylylene radicalized in the thermal decomposition room 102, and an outlet 103b for discharging an extra polyparaxylylene, and a turn table (a deposition table) 103c for supporting a sample where a polyparaxylylene film is deposited.

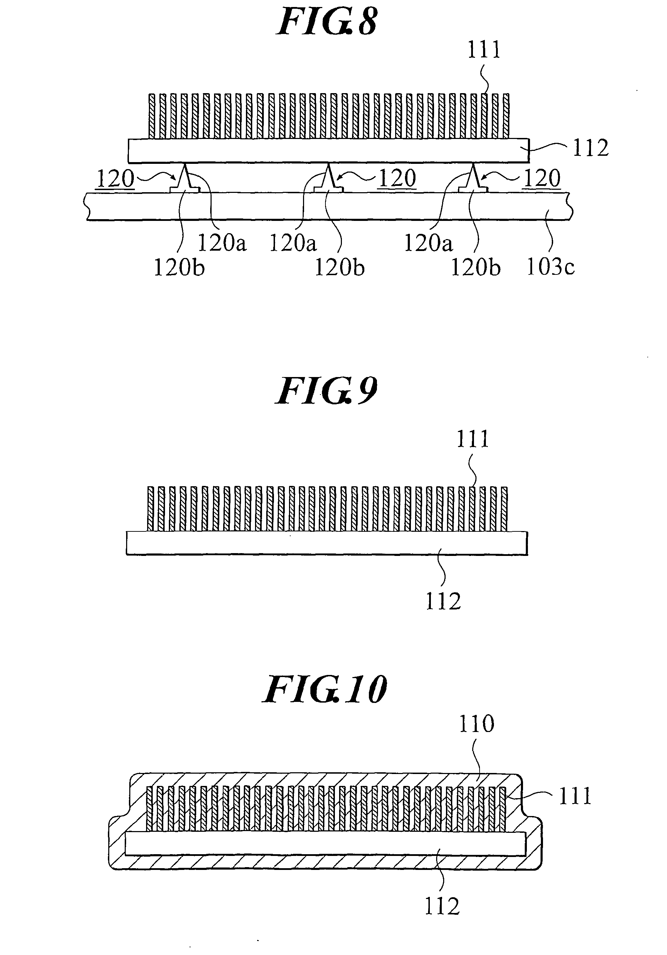

In the deposition apparatus, first, a support 112 (a photostimulable phosphor plate) having formed thereon a photostimulable phosphor layer 111 is supported on the turn table 103c of the deposition room 103 by using sample supporting needles 120. More specifically, as shown in FIG. 7 and FIG. 8, the support 112 is disposed on the turn table 103c where the bottom face of the support 112 is supported by the sample supporting needles 120 disposed so as to form a nearly regular triangle. The sample supporting needles 120 form a sample support. Here, the sample supporting needles 120 have a sharp sample supporting part 120a at one end and a circular placing part 120b which contacts the upper face of the turn table 103c at the other end. Incidentally, as shown in FIG. 9, in the support 112 having formed thereon the photostimulable phosphor layer 111, the columnar crystal is grown and formed, for example, in a thickness of 400 μm on one surface of the glass support 112 (thickness: 0. 5 mm) by a deposition method.

Next, the support 112 having formed thereon the photostimulable phosphor layer 111 is disposed on the turn table 103c and introduced into the deposition room 103. Diparaxylylene vaporized by heating at 175°C in the vaporization room 101 and radicalized by elevating the temperature under heat to 690°C in the thermal decomposition room 102 is introduced into the deposition room 103 from the inlet 103a, whereby a polyparaxylylene film 110 is deposited on the whole surface of the photostimulable phosphor layer 111 and the support 112, for example, to a thickness of 10 μm (see FIG. 8). That is, the support 112 having formed thereon the photostimulable phosphor layer 111 is supported only by the point of the sample supporting part 120a in the sample supporting needle 120 on the turn table 103c, so that the polyparaxylylene film 110 can be deposited not only on the surface of the photostimulable phosphor layer 111 and the surface of the support 112 but also on the rear surface and the like of the support 112.

In addition, in this case, the inside of the deposition room 103 is kept at a degree of vacuum of approximately 13 Pa. Further, the turn table 103c is rotated, for example, at a speed of 4 rpm so as to uniformly deposit the first polyparaxylylene film 110. Further, an extra polyparaxylylene is discharged from the outlet 103b, introduced into the cooling room 104 for performing deodorization and cooling and then, introduced into the discharging system 105 having a vacuum pump.

Thus, the polyparaxylylene film 110 is deposited on the whole surface of the photostimulable phosphor layer 111 and the support 112. By this step, the step of forming an organic film on the support (the substrate) having a photostimulable phosphor layer according to the present invention is terminated.

The polyparaxylylene film 110 integrally formed on the support (the substrate) having the photostimulable phosphor layer in such a way is shown in FIG. 10.

According to the above-described deposition method of the polyparaxylylene film, the support 112 having formed thereon the photostimulable phosphor layer 111 is supported only by the point of the sample supporting part 120a in the sample supporting needle 120 on the turn table 103c, and therefore, the touch area between the bottom face of the support 112 and the point of the sample supporting part 120a becomes small, so that the polyparaxylylene film can be uniformly deposited also on the rear surface and the like of the support 112. In addition, the support 112 can be easily taken up from the turn table 103c after deposition of the polyparaxylylene film 110.

Further, in order to prevent a slight pinhole due to the supporting needle, it is preferable that deposition of the polyparaxylylene film 110 is performed in twice or more and at the deposition of the polyparaxylylene film, the support 112 is supported while moving a supporting position of the support 112 according to the sample supporting needle 120 in each case. By moving thus the supporting position of the support 112 according to the sample supporting needle 120 at the deposition in twice, the pinhole of polyparaxylylene film is avoided, so that peeling of the film can be prevented and the moisture resistance of the photostimulable phosphor layer can be further elevated.

In the present invention, the organic film comprising a polyparaxylylene film or the like is formed in a film thickness of 0.5 to 60 μm, preferably 1.0 to 40 μm as described above.

Incidentally, in the above description, the support 112 having formed thereon the photostimulable phosphor layer 111 is supported by three sample supporting needles 120, however, it may be supported by four or more sample supporting needles.

Further, in the above description, the sample supporting needle 120 has the sharp sample supporting part 120a at one end and has a circular placing part 120b at the other end. The sample supporting needle 120 can appropriately change the shape as long as it is small in the touch area with the bottom face of the support 112 and can stably support the support 112 on the turn table 103c.

<Spacer>

In the present invention, in a phosphor plate comprising a support having formed thereon a photostimulable phosphor layer, a water repellent organic film such as a polyparaxylylene film is integrally formed on the surface of the photostimulable phosphor or not only on the surface of the photostimulable phosphor but also on the rear surface of the support. Thereafter, the photostimulable phosphor plate having the organic film is sealed with a moisture-proof protective film comprising a film having the metal oxide layer formed by deposition or comprising a plurality of laminated resin films containing the film.

In order to seal the plate having a photostimulable phosphor layer with the moisture-proof protective film, any known method can be used. Examples of the method include a method of interposing a phosphor sheet between the upper and lower moisture-proof protective films, and heating and fusing the peripheral part by an impulse sealer, or a lamination method of pressing and heating the phosphor sheet between two heated rollers.

FIG. 4 above shows an example of integrally sealing the photostimulable phosphor plate by using the moisture-proof protective film in such a manner.

In the above-described method of heating and fusing the sheet by an impulse sealer, the heating and fusing in an atmosphere at a reduced pressure is preferable in terms of preventing displacement of the phosphor sheet in the moisture-proof protective film or eliminating moisture in air.

At the sealing of the phosphor sheet by use of the moisture-proof protective film having deposited and formed thereon a metal oxide layer of the present invention, when a resin layer which is the outermost layer of the moisture-proof protective film at the side contacting the phosphor sheet is prepared by a resin film having thermofusibility, the moisture-proof protective film becomes fusible and the sealing work of the phosphor sheet can be effectively performed.

These thermofusible resin films described above are a resin film which can be fused by a generally used impulse sealer, for example, an ethylene-vinyl acetate copolymer (EVA), a polypropylene (PP) film, a polyethylene (PE) film and the like can be given, however, the film is not limited thereto.

Further, when inorganic fine particles such as silica, titanium, zeolite, or the like in an amount of 0.01 mass% to 1.0 mass% are incorporated in the resin layer having thermofusibility, a large periodic image unevenness caused by the sealing work of phosphor sheet according to thermofusion can be preferably prevented. If the amount of the fine particles incorporated is 0.01 mass% or less, the effect is small, whereas if it is 1.0 mass% or more, degradation in the transparency and the haze value of the laminated protective film is accompanied.

For the purpose of improving adhesive property in the adhering part between the moisture-proof protective film, and the organic film provided on the photostimulable phosphor and the surface thereof, the face adhering to the moisture-proof protective film may be further provided with an under coating layer, or may be subjected to a surface roughing.

In the radiographic image conversion panel of the present invention, since the moisture-proof protective film on the support side of the photostimulable phosphor plate may be optically opaque, the moisture-proof protective film on the support side is preferably an aluminum laminated film for the improvement of moisture-proof property.

The film thickness of the aluminum foil film for use in lamination is desirably 9 μm or more in view of degradation in the moisture-proof property due to pinhole or the like. Further, the film thickness of the moisture-proof protective film on the support side is desirably 200 μm or less, similar to the moisture-proof protective film on the phosphor face side. That is, in FIG. 4, the moisture-proof protective film 114 on the support face side is preferably a laminated moisture-proof film formed by laminating one or more aluminum film layer. Thereby, invasion of water can be surely reduced.

In the radiographic image conversion panel of the present invention, the resin layer having thermofusibility, which is the outermost layer of the moisture-proof protective film at the side contacting the phosphor face, and the phosphor face may be adhered or not substantially adhered to each other. The adhesion is improved by forming the above-described organic layer.

In the radiographic image conversion panel of the present invention, if the film thickness of the moisture-proof protective film exceeds 200 μm, the film handling property at the sealing work becomes worse and the thermofusion by an impulse sealer or the like described later becomes difficult, therefore, the film thickness is desirably 200 μm or less.

<Low refractive index layer>

Further, in the present invention, a low refractive index layer may be provided in the above-described structure. The low refractive index layer is composed of a raw material having refractive index lower than that of a resin material constructing a moisture-proof protective film. By virtue of the existence of the layer, deterioration in sharpness can be lowered even if the film thickness of the protective layer or the moisture-proof protective film is increased. For example, the following materials can be preferably used in a state of a thin film formed by a vapor phase growth method such as deposition.

| Materials | Refractive index |
| --- | --- |
| CaF | 1.23 to 1.26 |
| $Na_2AlF_6$ | 1.35 |
| $MgF_2$ | 1.38 |
| $SiO_2$ | 1.46 |

Alternatively, the following liquid layer can also be used.

| Materials | Refractive index |
| --- | --- |
| ethyl alcohol | 1.36 |
| methyl alcohol | 1.33 |
| diethyl alcohol | 1.35 |

Further, when a layer having substantial refractive index of 1, such as a gaseous layer of air, nitrogen, argon or the like, or a vacuum layer is used as the low refractive index of the present invention, an effect of preventing deterioration of sharpness is high, therefore, this is particularly preferable.

The thickness of the low refractive index layer of the present invention is from 0.05 μm to 3 mm in terms of practical use.

The low refractive index layer of the present invention may be in a state adhering to a photostimulable layer or may be separated from the photostimulable layer. As one method for adhering the low refractive index layer to the photostimulable layer, an adhesive is used. In this case, the refractive index of the adhesive is preferably approximate to the refractive index of the photostimulable layer or the refractive index of the low refractive index layer.

<Imaging method>

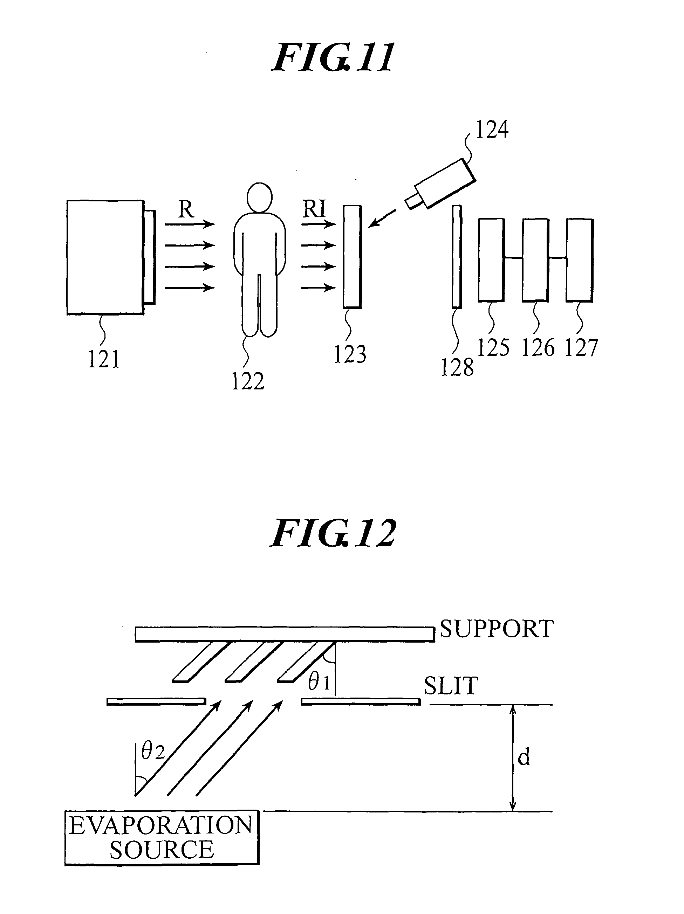

FIG. 11 schematically shows the radiographic image conversion method using the radiographic image conversion panel of the present invention.

More specifically, in FIG. 11, the numeral 121 denotes a radiation generator, 122 denotes a subject, 123 denotes the radiographic image conversion panel according to the present invention, 124 denotes a photostimulated excitation light source (of a laser or the like), 125 denotes a photoelectric conversion device for detecting the photostimulated fluorescence emitted by the conversion panel, 126 denotes a device for reproducing signals detected by the photoelectric conversion device 125 as an image, 127 denotes a device for displaying the reproduced image, and 128 denotes a filter for separating the photostimulated excitation light from the photostimulated fluorescence and transmitting only the photostimulated fluorescence. In addition, the devices posterior to the photoelectric conversion device 125 may be any of those which can reproduce optical information from the radiographic image conversion panel 123 as an image in any form, and by no means limited to the above.

As shown in FIG. 11, a radiation ray (R) from the radiation generator 121 is made incident on the radiographic image conversion panel 123 through the subject 122 (RI). This incident radiation ray is absorbed in the photostimulable layer of the panel 123, where its energy is accumulated and an accumulated image of the radiographic transmitted image is formed.

Next, this accumulated image is excited by the photostimulated excitation light from the photostimulated excitation light source 124 and emitted as photostimulated luminescence.

The strength and weakness of the emitted photostimulated luminescence are proportional to the amount of the accumulated radiation energy. Accordingly, this optical signal is, for example, photoelectrically converted by the photoelectric conversion device 125 such as a photomultiplier or the like, reproduced as an image by the image reproducing device 126, and is displayed by the image display device 127, so that the radiographic transmitted image of the subject can be observed.

EXAMPLES

Hereinafter, the present invention will be explained in detail by referring to the Examples. However, the present invention is not limited to these Examples.

Example

<Preparation of Photostimulable Phosphor Plate>

A photostimulable phosphor layer having a photostimulable phosphor (CsBr:Eu) was formed on the surface of a support (a substrate) of glass ceramics (produced by Nippon Electric Glass Co., Ltd.) having a thickness of 1 mm and an area of 410 mm $\times$ 410 mm by using a vapor phase deposition apparatus shown in FIG. 12.

In addition, in performing deposition, the support was placed in the vapor phase deposition apparatus. Then, press molding was performed by using the phosphor raw material (CsBr:Eu) as the evaporation source, and the support was charged in a water-cooled crucible (not shown).

Thereafter, air in the vapor phase deposition apparatus was discharged by connecting a pump to an outlet, and further, nitrogen was introduced from a gas inlet into the apparatus (flow rate: 1, 000 sccm (sccm: standard cc/min($1 \times 10^{-6}$ m$^3$/min))). After the degree of vacuum in the apparatus was kept to 6. 65 $\times$ 10$^{-3}$ Pa, the evaporation source was heated at 650°C and the distance (d) between the support and the evaporation source was made to be 60 cm. Then, from a normal line direction of the support surface (more specifically, a slit and the evaporation source were aligned to the normal line direction of the support ($\theta 2$ = about 0 degree) ) , deposition was performed on one surface of the glass support (the substrate) by using an alkali halide phosphor comprising CsBr:0.0001Eu and by carrying the support toward the direction parallel to the longitudinal direction of the support. The deposition was terminated when the film thickness of the photostimulable phosphor layer became 400 µm. Thus, a phosphor plate was prepared.

Next, the phosphor plate was cut into a square of 5 cm $\times$ 5 cm. Using a deposition apparatus shown in FIGS. 6 and 7 above and changing the thickness of a polyparaxylylene film as shown in Table 1, the polyparaxylylene film was integrally formed by deposition on the photostimulable phosphor layer and the rear surface of the support.

More specifically, the cut sample was disposed on the above-described turn table 103c, and introduced into the deposition room 103. Diparaxylylene vaporized by heating at 175°C in the vaporization room and radicalized by elevating the temperature under heat to 690°C in the thermal decomposition room 102 was introduced into the deposition room 103 from the inlet 103a. Thus, a diparaxylylene film was deposited on the whole surface of the photostimulable phosphor layer 111 and the support 112.

Incidentally, the deposition was performed in twice. The supporting position of the support 112 by the sample supporting needle 120 was moved so as to prevent pinholes and peeling of the xylylene film. There were prepared samples each having a xylylene film thickness of 5, 10, 20 and 50 µm in total of each deposition.

Thereafter, each of the photostimulable phosphor plates having deposited and formed thereon a polyparaxylylene film was sealed as follows. A laminated film containing an aluminum-deposited film VMPET composed of PET 12///VMPET70///PE15///LDPE 30 (the numerals indicated behind each resin film represent a film thickness (µm) of each film, "///" means a dry lamination adhesive layer, "///" represents that the thickness of the adhesive layer is 3.0 µm, and the dry lamination adhesive utilized is a two-liquid reactive urethane adhesive) was used on the photostimulable phosphor layer side. A dry laminated film composed of casting polypropylene (CPP) 30 µm///aluminum film 9 µm///polyethylene terephthalate (PET) 188 µm ("///" represents an adhesive layer, the thickness of the adhesive layer in this case is 3.0 µm, and a two-liquid reactive urethane adhesive was used) was used as a protective film on the support face side of the phosphor plate. The peripheral part was fused under a reduced pressure by using an impulse sealer (sealing film: single).

In the above description, PET represents a polyethylene terephthalate, VMPET represents an alumina-deposited polyethylene terephthalate (produced by Toyo Metallizing Co.,Ltd.), PE represents a polyethylene, LDPE represents a low-density polyethylene, and CPP represents a casting polypropylene.

Incidentally, the fusion was performed such that the distance between the fusion part and the phosphor plate peripheral part was 1 mm. An impulse sealer heater having a width of 3 mm was used at the fusion.

Thus, the radiographic image conversion panel samples in Examples 1 to 4 were prepared.

Further, a radiographic image conversion panel sealed with a laminated film containing the above-described deposited film was prepared as Comparative Example 1, in the same manner as in Examples except for not performing the coating with a polyparaxylylene film, on the support having formed thereon the above-described phosphor layer.

Further, using on the phosphor side a laminated film composed of PET12///VMPET70///VMPET70///PE15///LDPE30 where the above-described VMPET was laminated, a phosphor plate not coated with a polyparaxylylene film was sealed in the same manner as in the above-described case, whereby a radiographic image conversion panel as another Comparative Example 2 was prepared (sealing film: double).

The thus-obtained radiographic image conversion panel was evaluated according to the following method.

(Evaluation of radiographic image conversion panel)

The sharpness was evaluated as follows. First, an X-ray with a tube voltage of 80 kVp was irradiated to the radiographic image conversion panel through a lead-made MTF chart. Thereafter, the panel was excited with a He-Ne laser beam, the photostimulated luminescence emitted from the phosphor layer was received by the same light receiver as above and converted into an electric signal. Then, this signal was recorded in a magnetic tape after the analog/digital conversion and the magnetic tape was analyzed by a computer, whereby the modulation transfer function (MTF) of an X-ray image recorded in the magnetic tape was determined. In the following Table 1, 2 lp/mm(%) of MTF value at a spatial frequency of 2 cycles/mm is shown. In this case, as the MTF value is higher, the sharpness is more excellent.

(Evaluation of moisture resistance)

To each of the radiographic image conversion panels after sealing the phosphor sheet, an X-ray with a tube voltage of 80 kVp was irradiated from the rear surface side of the phosphor plate support. Thereafter, each panel was scanned and excited with a He-Ne laser beam (633 nm), the photostimulated luminescence emitted from the phosphor layer was received by a light receiver (a photomultiplier with spectral sensitivity of S-5), and then its intensity was measured. The intensity obtained was defined as luminance and made to be initial sensitivity. Subsequently, each of the radiographic image conversion panels was stored in a high moisture atmosphere at a temperature of 40°C and a relative humidity of 90%, then taken out and measured on sensitivity again. The time that the sensitivity was lowered to 80% based on the initial sensitivity was measured.

Table 1

| | Polyparaxylylene Film Thickness (μm) | Sealing Film | Moisture Resistance (hr) | Sharpness (%) |
|---|---|---|---|---|
| Example 1 | 5 | Single | 120 | 39 |
| Example 2 | 10 | Single | 180 | 37 |
| Example 3 | 20 | Single | 250 | 35 |
| Example 4 | 50 | Single | 350 | 30 |
| Comparative Example 1 | - | Single | 100 | 40 |
| Comparative Example 2 | - | Double | 400 | 20 |

It is found that the radiographic image conversion panel having formed thereon a polyparaxylylene film is excellent in moisture resistance as compared with the radiographic image conversion panel not provided with a polyparaxylylene film. It is also found that if the polyparaxylylene film is thicker, the moisture resistance is improved, whereas if the thickness becomes large, the sharpness is somewhat lowered. Incidentally, the panel in Comparative Example 2 is not provided with a polyparaxylylene film but doubly sealed with a film having a metal oxide-deposited layer, however, it is found that the lowering of sharpness is serious though the moisture resistance is surely improved.
As described above, a long life-time radiographic image conversion panel where a photostimulable phosphor layer formed by a vapor phase deposition is sealed with an organic film and a deposited film can be obtained.
The entire disclosure of Japanese Patent Application Nos. 2002-375035 and 2003-028048 filed on December 25, 2002 and February 5, 2003, respectively, are incorporated herein by reference in its entirety.

**Claims**

**1.** A radiographic image conversion panel comprising:

a support; and
a photostimulable phosphor layer provided on the support,

wherein a photostimulable phosphor is formed on the support by a vapor phase deposition method and then, heat treatment is performed at a temperature of from 80°C to 300°C.

**2.** The panel of claim 1, wherein the heat treatment is performed at a temperature of from 100°C to 200 °C.

3. The panel of claim 1 or 2, wherein the photostimulable phosphor layer comprises a photostimulable phosphor represented by a following Formula (1):

Formula (1)

$$M^1X \cdot aM^2X'_2 \cdot bM^3X''_3 : eA \qquad (1)$$

wherein the $M^1$ is at least one kind of alkali metal selected from a group consisting of Li, Na, K, Rb and Cs, the $M^2$ is at least one kind of bivalent metal selected from a group consisting of Be, Mg, Ca, Sr, Ba, Zn, Cd, Cu and Ni, the $M^3$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, each of the X, the X' and the X'' is at least one kind of halogen selected from a group consisting of F, Cl, Br and I, the A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, and each of the a, the b and the e represents a numeric value in a range of $0 \leq a < 0.5$, $0 \leq b < 0.5$ and $0 < e \leq 0.2$.

4. The panel of claim 3, wherein the $M^1$ in Formula (1) is at least one kind of alkali metal selected from a group consisting of K, Rb and Cs.

5. The panel of claim 3 or 4, wherein the X in Formula (1) is at least one kind of halogen selected from a group consisting of Br and I.

6. The panel of claim 3, 4 or 5, wherein the $M^2$ is Formula (1) is at least one kind of bivalent metal selected from a group consisting of Be, Mg, Ca, Sr and Ba.

7. The panel of claim 3, 4, 5 or 6, wherein the $M^3$ in Formula (1) is at least one kind of trivalent metal selected from a group consisting of Y, La, Ce, Sm, Eu, Gd, Lu, Al, Ga and In.

8. The panel of claim 3, 4, 5, 6 or 7, wherein the b in Formula (1) represents a numeric value in a range of $0 \leqq b \leqq 10^{-2}$.

9. The panel of claim 3, 4, 5, 6, 7 or 8, wherein the A in Formula (1) is at least one kind of metal selected from a group consisting of Eu, Cs, Sm, Tl and Na.

10. The panel of any of claims 1 to 9, wherein the photostimulable phosphor layer comprises a columnar crystal of the photostimulable phosphor.

11. The panel of claim 10, wherein the columnar crystal comprises a photostimulable phosphor represented by the following Formula (2):

Formula (2)

CsX: A

wherein the X represents Br or I, and the A represents Eu, In, Ga or Ce.

12. A radiographic image conversion panel comprising:

a support;
a photostimulable phosphor layer formed on the support by a vapor phase deposition to a film thickness of 50 μm or more;
an organic film integrally deposited and formed to cover a surface of a photostimulable phosphor of the photostimulable phosphor layer; and
a metal oxide-deposited film covering at least a side of the photostimulable phosphor layer.

13. The panel of claim 12, wherein the organic film is a polyparaxylylene film.

14. The panel of claim 12 or 13, wherein the photostimulable phosphor is represented by the following Formula (1):

Formula (1)

$$M^1X \cdot aM^2X_2' \cdot bM^3X_3'': eA$$

wherein the $M^1$ is at least one kind of alkali metal selected from a group consisting of Li, Na, K, Rb and Cs, the $M^2$ is at least one kind of divalent metal selected from a group consisting of Be, Mg, Ca, Sr, Ba, Zn, Cd, Cu and Ni, the $M^3$ is at least one kind of trivalent metal selected from a group consisting of Sc, Y, La, Ce, Pr, Nd, Pm, Sm, Eu, Gd, Tb, Dy, Ho, Er, Tm, Yb, Lu, Al, Ga and In, each of the X, the X' and the X'' is at least one kind of halogen atom selected from a group consisting of F, Cl, Br and I, the A is at least one kind of metal selected from a group consisting of Eu, Tb, In, Ga, Cs, Ce, Tm, Dy, Pr, Ho, Nd, Yb, Er, Gd, Lu, Sm, Y, Tl, Na, Ag, Cu and Mg, and each of the a, the b and the e represents a numeric value in a range of $0 \leqq a < 0.5$, $0 \leqq b < 0.5$ and $0 < e \leqq 0.2$.

15. The panel of claim 14, wherein the $M^1$ in Formula (1) is at least one kind of alkali metal selected from a group consisting of K, Rb and Cs.

16. The panel of claim 14 or 15, wherein the X in Formula (1) is at least one kind of halogen atom selected from a group consisting of Br and I.

17. The panel of claim 14, 15 or 16, wherein the $M^2$ in Formula (1) is at least one kind of divalent metal selected from a group consisting of Be, Mg, Ca, Sr and Ba.

18. The panel of claim 14, 15, 16 or 17, wherein the $M^3$ in Formula (1) is at least one kind of trivalent metal selected from a group consisting of Y, Ce, Sm, Eu, Al, La, Gd, Lu, Ga and In.

19. The panel of Claim 14, 15, 16, 17 or 18, wherein the b in Formula (1) is a numeric value in a range of $0 \leqq b \leqq 10^{-2}$.

20. The panel of claim 14, 15, 16, 17, 18 or 19, wherein the A in Formula (1) is at least one kind of metal selected from a group consisting of Eu, Cs, Sm, Tl and Na.

21. The panel of any of claims 12 to 22, wherein the photostimulable phosphor comprises a columnar crystal.

22. The panel of claim 21, wherein the columnar crystal comprises a photostimulable phosphor represented by the following Formula (2) as a main component,

Formula (2)

CsX: A

wherein the X represents Br or I, and the A represents Eu, In, Ga or Ce.

# *FIG.1*

13  14 13  14  13

12

11

# *FIG.2*

15  11  15

R

θ1=30°

13

13

16

R

θ2=60°

# FIG.3

EP 1 441 019 A1

# FIG.4

113    111

112    114

# FIG.5

112

111    V

111

θ1    P

θ2    P

## *FIG.6*

## *FIG.7*

# FIG.8

111

112

120    120    120

120a    120a    120a
120b    120b    120b    103c

# FIG.9

111

112

# FIG.10

110

111

112

# FIG.11

# FIG.12

**European Patent Office**

## EUROPEAN SEARCH REPORT

Application Number

EP 03 02 8917

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | US 2003/047697 A1 (HOSOI YUICHI ET AL) 13 March 2003 (2003-03-13) * example 1 * ----- | 1-5,8-11 | C09K11/08 G21K4/00 |
| X | EP 0 185 534 A (KONISHIROKU PHOTO IND) 25 June 1986 (1986-06-25) * example 1 * ----- | 1-5,9,10 | |
| X | EP 0 174 875 A (KONISHIROKU PHOTO IND) 19 March 1986 (1986-03-19) * page 6, line 13 - page 7, line 17 * * example 1; table 1 * * example 2; table 2 * ----- | 1,3-11 | |

TECHNICAL FIELDS
SEARCHED (Int.Cl.7)

C09K
G21K

The present search report has been drawn up for all claims

| Place of search | Date of completion of the search | Examiner |
|---|---|---|
| Munich | 3 March 2004 | Doslik, N |

European Patent

Office

---

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11

EP 1 441 019 A1

The Search Division considers that the present European patent application does not comply with the requirements of unity of invention and relates to several inventions or groups of inventions, namely:

1. claims: 1-11

   A radiographic image conversion panel comprising a support and a photostimulable phosphor layer, obtainable by vapor phase deposition of the phosphor layer and followed by heat treatment.

   ---

2. claims: 12-22

   A radiographic image conversion panel comprising a support, a photostimulable phosphor, an organic layer to cover the said phosphor and a metal-oxide film covering at least a side of said phosphor.

   ---

**ANNEX TO THE EUROPEAN SEARCH REPORT
ON EUROPEAN PATENT APPLICATION NO.**                EP 03 02 8917

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2004

| Patent document cited in search report | | Publication date | Patent family member(s) | | Publication date |
|---|---|---|---|---|---|
| US 2003047697 | A1 | 13-03-2003 | JP | 2003050298 A | 21-02-2003 |
| EP 0185534 | A | 25-06-1986 | JP | 61245099 A | 31-10-1986 |
| | | | JP | 61245100 A | 31-10-1986 |
| | | | JP | 62039797 A | 20-02-1987 |
| | | | JP | 62039798 A | 20-02-1987 |
| | | | JP | 62039799 A | 20-02-1987 |
| | | | JP | 2080976 C | 09-08-1996 |
| | | | JP | 7027078 B | 29-03-1995 |
| | | | JP | 61246700 A | 01-11-1986 |
| | | | JP | 2080977 C | 09-08-1996 |
| | | | JP | 7027079 B | 29-03-1995 |
| | | | JP | 61142497 A | 30-06-1986 |
| | | | JP | 61142498 A | 30-06-1986 |
| | | | JP | 61142499 A | 30-06-1986 |
| | | | JP | 61142500 A | 30-06-1986 |
| | | | EP | 0185534 A2 | 25-06-1986 |
| | | | DE | 3578359 D1 | 26-07-1990 |
| | | | US | 4769549 A | 06-09-1988 |
| EP 0174875 | A | 19-03-1986 | JP | 2060688 C | 10-06-1996 |
| | | | JP | 7084588 B | 13-09-1995 |
| | | | JP | 61072087 A | 14-04-1986 |
| | | | JP | 2060689 C | 10-06-1996 |
| | | | JP | 7084589 B | 13-09-1995 |
| | | | JP | 61072088 A | 14-04-1986 |
| | | | JP | 2060690 C | 10-06-1996 |
| | | | JP | 7084590 B | 13-09-1995 |
| | | | JP | 61072089 A | 14-04-1986 |
| | | | JP | 2053520 C | 23-05-1996 |
| | | | JP | 7074334 B | 09-08-1995 |
| | | | JP | 61072091 A | 14-04-1986 |
| | | | JP | 2060691 C | 10-06-1996 |
| | | | JP | 7084591 B | 13-09-1995 |
| | | | JP | 61073786 A | 15-04-1986 |
| | | | JP | 1805653 C | 26-11-1993 |
| | | | JP | 5014751 B | 25-02-1993 |
| | | | JP | 61073787 A | 15-04-1986 |
| | | | DE | 3578081 D1 | 12-07-1990 |
| | | | EP | 0174875 A2 | 19-03-1986 |
| | | | US | 5028509 A | 02-07-1991 |

EPO FORM P0459

For more details about this annex : see Official Journal of the European Patent Office, No. 12/82